# EUROPEAN PATENT APPLICATION

(11) **EP 2 947 873 A1**
(43) Date of publication of application: **25.11.2015**
(21) Application number: 13873486.8
(22) Date of filing: 30.05.2013
(51) Int. Cl.: H04N 13/00

(54) **SYNCHRONOUS SIGNAL PROCESSING METHOD AND DEVICE FOR STEREOSCOPIC DISPLAY OF SPLICED-SCREEN BODY, AND SPLICED-SCREEN BODY**

(30) Priority: 31.01.2013 CN 201310039739
(71) Applicant: Leyard Optoelectronic Co., Ltd, Beijing 100091 (CN)
(72) Inventor: LEI, Weilin, Beijing 100091 (CN); LU, Changjun, Beijing 100091 (CN)
(74) Representative: South, Nicholas Geoffrey
(86) International application number: PCT/CN2013/076506
(87) International publication number: WO 2014/117459

(57) **Abstract**

The invention discloses a synchronization signal processing method and device for stereoscopic display of a spliced screen body, and a spliced screen body, wherein the spliced screen body comprises a plurality of module screens spliced with one another. The method comprises: selecting a first module screen from the plurality of module screens according to a preset rule; obtaining a synchronization signal for stereoscopic display through the first module screen, wherein the synchronization signal is used for indicating the plurality of module screens to perform synchronous display of video images; and transmitting the synchronization signal to the other module screens through the first module screen according to the preset rule. By means of the technical solution provided by the present invention, the technical problems of high cost, complex implementation, and the like existing in synchronization signal transmission solutions in the related art are solved, so that the cost is reduced and the complexity of a synchronization mode is also lowered.

## Description

### Technical field of the invention

The present invention relates to the field of spliced screen body display, and in particular to a synchronization signal processing method and device for stereoscopic display of a spliced screen body, and a spliced screen body.

### Background of the invention

Large-sized frame colour screen body (for example, a full-colour LED) has been widely used. Such a display screen body of ultrahigh physical resolution is generally multi-screen spliced by splitting a screen body module. With the development of the display technology, stereoscopic display is widely used in the spliced screen body. However, since a stereoscopic image involves in simultaneous display of left eye and right eye images, and the display of the stereoscopic image of the screen body needs to be matched with a pair of 3D glasses simultaneously, this requires that any spliced screen needs to be synchronous with the 3D glasses. But in fact, for the display of the spliced screen body, since each spliced module screen body (or a called module screen) displays independently, the spliced screen bodies are not synchronized with one another easily. For example, when some module screen bodies display left eye images, some module screen bodies display right eye images. In this way, the audience watch a messy stereoscopic display of the whole large screen image. The problem not existing in a non-spliced screen body appears in the spliced screen body easily.

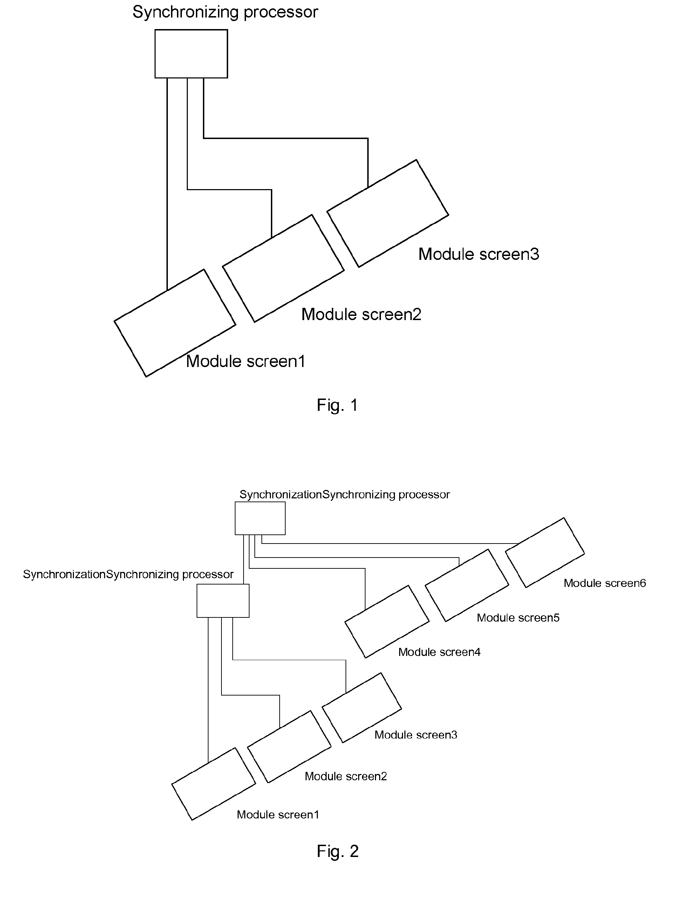

For the problem of synchronous stereoscopic display of large-sized spliced screen body, there are generally two processing solutions: (1) A synchronization processor is used to transmit the synchronization signal to a plurality of spliced screen bodies simultaneously, that is, the synchronization processor, as a centre point, transmits the synchronization signal to the plurality of spliced modules simultaneously, as shown in Fig. 1. (2) A plurality of synchronization processors transmit a synchronization command simultaneously so that the stereoscopic display of the spliced screen module is in a synchronous state, if the large-sized screen body is divided into more module spliced screens, the synchronization signal is transmitted in a cascading way, specifically as shown in Fig. 2.

However, all of the above processing solutions are transmitting the synchronizing signal to each module screen body through the synchronization processor, in a case of large-sized screen body, a long connecting wire is needed, the synchronization signal suitable for long distance transmission needs to be generated, especially for the mode in which more spliced module screen bodies perform synchronous transmission cascading a synchronous apparatus. This synchronization mode is realized so that the complexity is high and the cost is increased.

Currently, no effective solution has been proposed for the above problem in the related art.

### Summary of the invention

The invention provides a synchronization signal processing method and device for stereoscopic display of a spliced screen body, and a spliced screen body, by which the above technical problem is solved.

According to an aspect of the invention, a synchronization signal processing method for stereoscopic display of spliced screen body is provided, wherein the spliced screen body comprises a plurality of module screens spliced with one another, and the method comprises: selecting a first module screen from the plurality of module screens according to a preset rule; obtaining a synchronization signal for stereoscopic display through the first module screen, wherein the synchronization signal is used for indicating the plurality of module screens to perform synchronous display of video images; and transmitting the synchronization signal to the other module screens through the first module screen according to a preset rule.

Preferably, transmitting the synchronization signal to the other module screens through the first module screen according to the preset rule comprises: transmitting the synchronization signal to next module screen through the first module screen from near and far step by step until all the module screens receive the synchronization signal.

Preferably, transmitting the synchronization signal to the next module screen through the first module screen from near and far step by step comprises: de-noising, the synchronization signal by the module screen having received, the synchronization signal; and transmitting the de-noised synchronization signal to the next module screen.

Preferably, transmitting the synchronization signal to the next module screen through the first module screen from near and far step by step comprises: converting, , a signal level representing the synchronization signal into a level suitable for distant transmission greater than a preset threshold by the module screen having received the synchronization signal; and transmitting the synchronization signal to the next module screen in a form of a level suitable for distant transmission greater than a preset threshold.

Preferably, the preset rule comprises: adopting the module screen of the plurality of module screens located in a centre position of the spliced screen body as the first module screen.

Preferably, the synchronization signal transmitted to other modules carries delay compensation information corresponding to the other module screens, wherein the delay compensation information is used for compensating for delay generated during the transmission process of the synchronization signal.

Preferably, obtaining the synchronization signal for stereoscopic display through the first module screen comprises one of the following: receiving the synchronization signal from an external video source or a synchronous processor through the first module screen; and generating the synchronization signal by the first module screen itself.

According to another aspect of the invention, a synchronization signal processing device for stereoscopic display of spliced screen body is provided, applied to the spliced screen body, wherein the spliced screen body comprises a plurality of module screens spliced with one another, and the device comprises: a selecting module, configured to select a first module screen from the plurality of module screens according to a preset rule; an obtaining module, configured to obtain a synchronization signal for stereoscopic display through the first module screen, wherein the synchronization signal is used for indicating the plurality of module screens to perform synchronous display of video images; and a transmitting module, configured to transmit the synchronization signal to the other module screens through the first module screen according to the preset rule.

Preferably, the transmitting module is configured to transmit the synchronization signal to the next module screen through the first module screen from near and far step by step until all the module screens receive the synchronization signal.

Preferably, the selecting module is configured to select the first module screen according to the following preset rule: adopting the module screen of the plurality of module screens located in a centre position of the spliced screen body as the first module screen.

According to still another aspect of the invention, a spliced screen body is provided, comprising: a plurality of module screens spliced with one another, wherein the specified module screen of the plurality of module screens receives the synchronization signal from a video source, and transmits the synchronization signal to the next module screen from near and far step by step until all the module screens receive the synchronization signal.

According to the invention, by means of the technical solution of transmitting the synchronization signal to the other module screens by the module screen selected from the spliced screen body, the technical problems of high cost, complex implementation, and the like existing in synchronization signal transmission solutions in the related art are solved, so that the cost is reduced and the complexity of a synchronization mode is also lowered.

### Brief description of the drawings

The accompanying drawings described herein serve to provide a further understanding of the invention, and constitute a part of this application. The schematic embodiments of the invention and description thereof serve to explain the invention rather than to limit the invention inappropriately. In the drawings:
Fig. 1 is a schematic diagram of a topology that a synchronization processor, as a centre point, transmits the synchronization signal to a plurality of spliced modules simultaneously according to the prior art;
Fig. 2 is a schematic diagram of a topology that a plurality of synchronization processors, as centre points, transmit the synchronization signal to a plurality of module screens simultaneously according to the prior art;
Fig. 3 is a flowchart of a synchronization signal processing method for stereoscopic display of a spliced screen body according to an embodiment of the invention;
Fig. 4 is a schematic diagram of forwarding a synchronization signal between module screens according to an embodiment of the invention;
Fig. 5 is a schematic diagram of forwarding a synchronization signal by a module screen of the synchronization signal according to an embodiment of the invention;
Fig. 6 is a schematic diagram of displaying an image according to a synchronization signal according to an embodiment of the invention;
Fig. 7 is a schematic diagram of displaying an image according to a synchronization signal according to an embodiment of the invention; and
Fig. 8 is a structural diagram of a synchronization signal processing device for stereoscopic display of a spliced screen body according to an embodiment of the invention.

### Detailed description of the embodiments

Hereinafter, the invention will be described in detail with reference to the accompanying drawings and in conjunction with the embodiments. It should be noted that the embodiments of the application and the features of the embodiments may be combined with each other without any conflict.

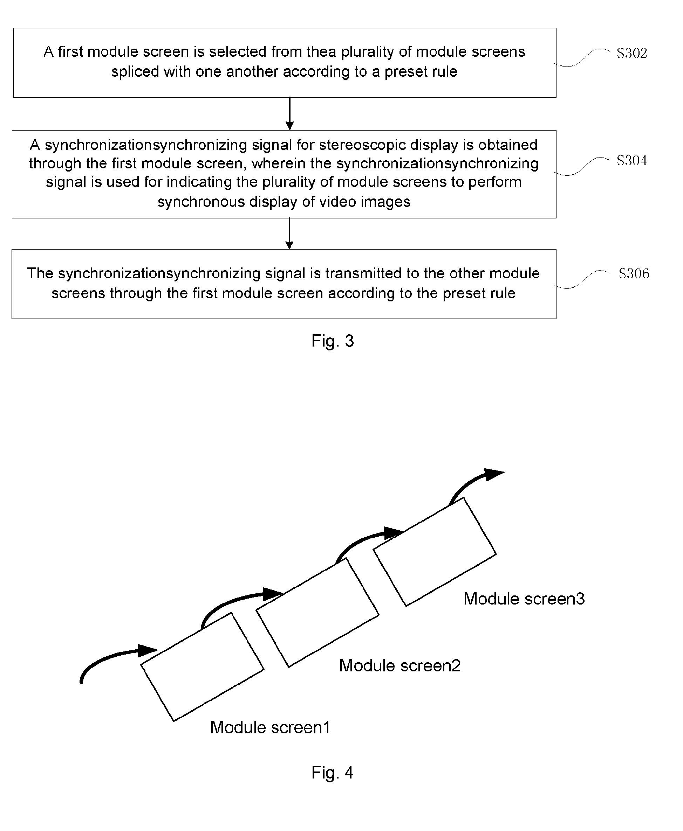

Fig. 3 is a flowchart of a synchronization signal processing method for stereoscopic display of a spliced screen body according to an embodiment of the invention. The spliced screen body comprises a plurality of module screens spliced with one another. As shown in Fig. 1, the method comprises:
Step 302: A first module screen is selected from the plurality of module screens according to a preset rule.
Step 304: A synchronization signal for stereoscopic display is obtained through the first module screen, wherein the synchronization signal is used for indicating the plurality of module screens to perform synchronous display of video images.
Step 306: The synchronization signal is transmitted to the other module screens through the first module screen according to the preset rule.

Through the above processing processes, since the synchronization signal is obtained by selecting one module screen from the module screens forming the spliced screen body, and the above synchronization signal is transmitted to the other module screens through the selected module screen, more connecting wires are saved, the cost is saved and the implementation is simple.

In Step 306, the synchronization signal is transmitted in many ways, may be transmitted in parallel, that is, the synchronization signal is transmitted to the other module screens simultaneously. The synchronization signal may be transmitted in series, that is, the synchronization signal is transmitted to the next module screen through the first module screen from near and far step by step until all the module screens receive the synchronization signal. Of course, the synchronization signal may also be transmitted in series and in parallel.

The first transmission way, i.e., in series, may be implemented by the process in Fig. 4 specifically. As shown in Fig. 4, the module screen 1, after obtaining the synchronization signal for stereoscopic display, transmits the synchronization signal to the module screen 2, and then transmits it to the module screen 3 via the module screen 2.

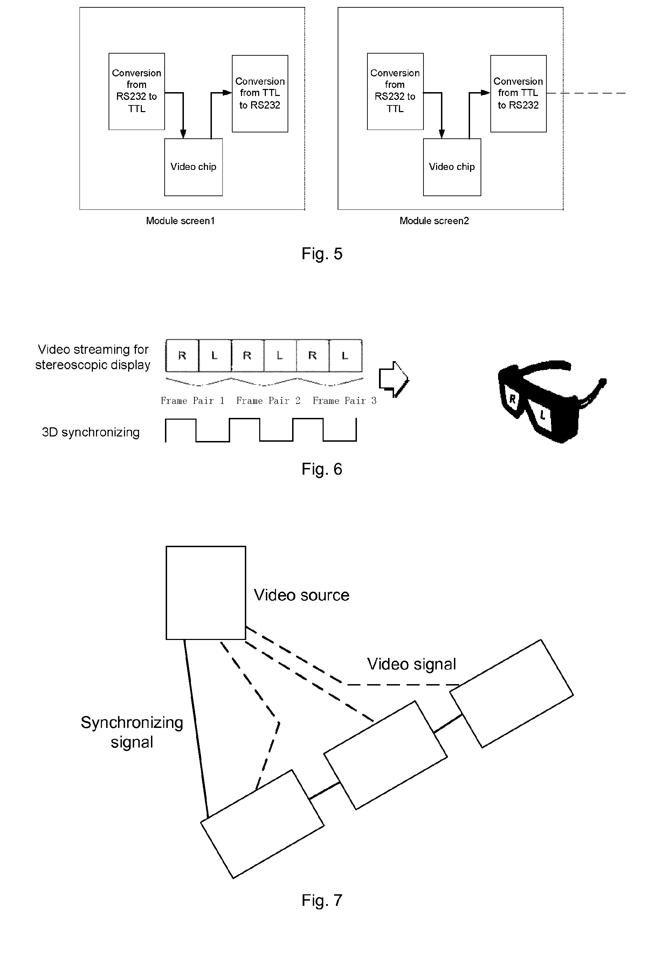

In the embodiment, the hardware implementation principle during the above transmission process may be shown in Fig. 5 and Fig. 6. As shown in Fig. 5, the conversion level between RS232 and TTL is required during the synchronization signal transmitting process.

For the control system of large-sized spliced display screen body, since each module screen has one control module, a synchronous input signal interface and a synchronous output interface are designed except a video input and control interface for the control module. In view of difference of signal input level standard of the synchronous input interface, synchronous signal input of 5V TTL level and signal input of RS232 level standard are integrated for the input interface, that is, the synchronous signal input of two level standards may be compatible under the same physical link. The setting of the register is chosen in the video chip. The synchronous input signal in the actual application case is selected through setting the value of the register or an external button. The synchronization signal indicates the processing of the input video after entering the video chip, such as performing scan display of the left eye image or the right eye image, and the corresponding synchronization signal is transmitted to the 3D glasses.

As shown in Fig. 6 and Fig. 7, the synchronization signal for stereoscopic display, by taking a field cycle as a unit, transmitting the indication signal of the left eye image and right eye image according to the left eye and right eye sequential frame images for stereoscopic display, when the right eye image is transmitted, the synchronization signal indicates high (corresponding to a frame R), when the left eye image is transmitted, the synchronization signal indicates low (corresponding to a frame L), when the left eye and right eye images are transmitted continuously, the synchronization signal generates a synchronization signal of a square wave form. Since the synchronization signal needs to be matched with the video image, the first level of the synchronization signal for stereoscopic display is transmitted to the module screen by the video signal source, and it is transmitted to the adjacent module screen by the module screen having received the stereoscopic synchronization signal of the video source, and gradually transferred and diffused by the adjacent module screen according to the transmission principle of proximity. For the video source, the video source is transmitted synchronously to each module screen in a spliced form. Therefore, although the video input of each module screen and stereoscopic synchronization signal of each module screen are from different apparatuses, the video input of each module screen is directly input by the video source, and the synchronization signal (for a stereoscopic display information source apparatus, there is only one output port for synchronization signal) is then gradually transferred to each module screen from the first level of the module screen, which still achieves the strict synchronization between the video and the synchronization signal.

Since the synchronization signal is interfered by noise during the transferring process, the strength of the synchronization signal is weakened. In order to avoid this problem, the synchronization signal needs to be de-noised by the module screen having received the synchronizing signal, and the de-noised synchronization signal is transmitted to the next module screen. That is to say, the synchronization signal transferred between the module screens is de-noised through the module screen, and the signal is transferred to the outside after being enhanced, that is, the signal will be enhanced when transferred once nearby to eliminate the noise caused during the transferring process.

In order to meet the requirement for large screen display, the synchronization accuracy is further improved, the module screen having received the synchronization signal needs to convert a signal level representing the synchronization signal into a level suitable for distant transmission greater than a preset threshold. The synchronization signal is transmitted to the next module screen in a form of the level suitable for distant transmission greater than a preset threshold. In this way, it is beneficial for long distance transmission. The level suitable for distant transmission greater than the preset threshold may select RS232 level, RS484 level, RS485 level or the like according to the requirement, certainly, is not limited thereto.

In the embodiment, the above preset rule comprises: adopting the module screen of the plurality of module screens located in a centre position of the spliced screen body as the first module screen. Of course, the other module screens may also be comprehensively considered and selected as the above first module screen according to the performance of each module screen.

The synchronization signal transmitted to the other modules carries delay compensation information corresponding to the other module screens, wherein the delay compensation information is used for compensating for delay generated during the transmission process of the synchronization signal.

In Step 302, the synchronization signal is obtained through the one of the following ways but not limited to this way: receiving the synchronization signal from an external video source or a synchronous processor through the first module screen; and generating the synchronization signal by the first module screen itself.

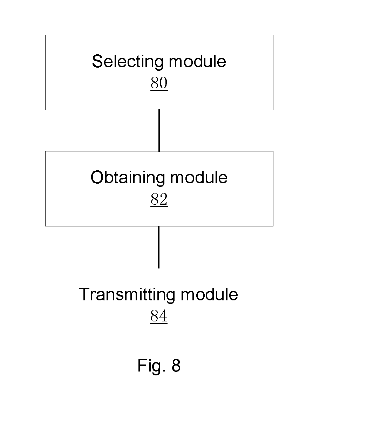

In the embodiment, a synchronization signal processing device for stereoscopic display of spliced screen body, applied to the spliced screen body, wherein the spliced screen body comprises a plurality of module screens spliced with one another. The above device is used for implementing the embodiments and the preferred embodiments, which has been described and not repeated here. The modules involved in the device will be described below. As used below, term "module" may implement the combination of software and/or hardware of predetermined functions. Although the device described in the following embodiments is preferably implemented in software, it is possible and conceived that hardware, or a combination of software and hardware may be used for implementation. Fig. 8 is a structural diagram of a synchronization signal processing device for stereoscopic display of a spliced screen body according to an embodiment of the invention. As shown in Fig. 8, the device comprises:
a selecting module 80, connected to an obtaining module 82 and configured to select a first module screen from a plurality of module screens according to a preset rule;
the obtaining module 82, connected to a transmitting module 84 and configured to obtain a synchronization signal for stereoscopic display through the first module screen, wherein the synchronization signal is used for indicating the plurality of module screens to perform synchronous display of video images; and
the transmitting module 84, configured to transmit the synchronization signal to the other module screens through the first module screen according to the preset rule.

Through the functions finished by the each module above, more connecting wires may also be saved, the cost is saved and the implementation is simple.

In the embodiment, the transmitting module 84 is configured to transmit the synchronization signal to the next module screen through the first module screen from near and far step by step until all the module screens receive the synchronization signal.

In the embodiment, the selecting module 80 is configured to select the first module screen according to the following preset rule: adopting the module screen of the plurality of module screens located in a centre position of the spliced screen body as the first module screen.

In the embodiment, the transmitting module 84 is configured to transmit the synchronization signal when the synchronization signal transmitted to the other modules comprises the following information: delay compensation information corresponding to the other module screens, wherein the delay compensation information is used for compensating for delay generated during the transmission process of the synchronization signal.

In the embodiment, a spliced screen body is provided, comprises: a plurality of module screens spliced with one another, wherein the specified module screen of the plurality of module screens receives the synchronization signal from a video source, and transmits the synchronization signal to the next module screen from near and far step by step until all the module screens receive the synchronization signal.

In another embodiment, software is provided, which is configured to execute the technical solutions described in the above embodiments and the preferred embodiments.

In another embodiment, a storage medium is provided, which stores the above software, and includes but is not limited to an optical disk, a floppy disk, a hard disk, an erasable memory or the like.

Obviously, those skilled in the art should understand that each of the mentioned modules or steps of the invention may be achieved by a universal computing device; the modules or steps may be focused on a single computing device, or distributed on the network formed by multiple computing devices. Optionally, they may be implemented by a program code which may be executed by the computing device. Thereby, the modules or steps may be stored in a storage device and executed by the computing device, and in some cases, the steps shown or described may be executed in an order different from here, or may be respectively manufactured as each integrated circuit module, or multiple modules or steps thereof may be manufactured as a single integrated circuit module, thus to be implemented. In this way, the invention is not limited to any particular hardware and software combination.

The above are only the preferred embodiments of the invention and are not intended to limit the invention, for those skilled in the art, various changes and variations may be made to the invention. Any modifications, equivalent replacements, improvements and the like within the spirit and principle of the invention shall be contained within the scope of protection of the claims of the invention.

## Claims

1. A synchronization signal processing method for stereoscopic display of spliced screen body, **characterized in that** the spliced screen body comprises a plurality of module screens spliced with one another, and the method comprises:
selecting a first module screen from the plurality of module screens according to a preset rule;
obtaining a synchronization signal for stereoscopic display through the first module screen, wherein the synchronization signal is used for indicating the plurality of module screens to perform synchronous display of video images; and
transmitting the synchronization signal to the other module screens through the first module screen according to a preset rule.

2. The method according to claim 1, **characterized in that** transmitting the synchronization signal to the other module screens through the first module screen according to the preset rule comprises:
transmitting the synchronization signal to next module screen through the first module screen from near and far step by step until all the module screens receive the synchronization signal.

3. The method according to claim 2, **characterized in that** transmitting the synchronization signal to the next module screen through the first module screen from near and far step by step comprises:
de-noising the synchronization signal by the module screen having received the synchronization signal; and
transmitting the de-noised synchronization signal to the next module screen.

4. The method according to claim 2, **characterized in that** transmitting the synchronization signal to the next module screen through the first module screen from near and far step by step comprises:
Converting a signal level representing the synchronization signal into a level suitable for distant transmission greater than a preset threshold by the module screen having received the synchronization signal; and
transmitting the synchronization signal to the next module screen in a form of a level suitable for distant transmission greater than a preset threshold.

5. The method according to claim 1, **characterized in that** the preset rule comprises:
adopting the module screen of the plurality of module screens located in a centre position of the spliced screen body as the first module screen.

6. The method according to claim 1, **characterized in that** the synchronization signal transmitted to other modules carries delay compensation information corresponding to the other module screens, wherein the delay compensation information is used for compensating for delay generated during the transmission process of the synchronization signal.

7. The method according to any one of claims 1 to 6, **characterized in that** obtaining the synchronization signal for stereoscopic display through the first module screen comprises one of the following:
receiving the synchronization signal from an external video source or a synchronous processor through the first module screen; and
generating the synchronization signal by the first module screen itself.

8. A synchronization signal processing device for stereoscopic display of spliced screen body, applied to the spliced screen body, **characterized in that** the spliced screen body comprises a plurality of module screens spliced with one another, and the device comprises:
a selecting module, configured to select a first module screen from the plurality of module screens according to a preset rule;
an obtaining module, configured to obtain a synchronization signal for stereoscopic display through the first module screen, wherein the synchronization signal is used for indicating the plurality of module screens to perform synchronous display of video images; and
a transmitting module, configured to transmit the synchronization signal to the other module screens through the first module screen according to the preset rule.

9. The device according to claim 8, **characterized in that** the transmitting module is configured to transmit the synchronization signal to the next module screen through the first module screen from near and far step by step until all the module screens receive the synchronization signal.

10. The device according to claim 8, **characterized in that** the selecting module is configured to select the first module screen according to the following preset rule:
adopting the module screen of the plurality of module screens located in a centre position of the spliced screen body as the first module screen.

11. A spliced screen body, comprising: a plurality of module screens spliced with one another, **characterized by** the specified module screen of the plurality of module screens receives the synchronization signal from a video source, and transmits the synchronization signal to the next module screen from near and far step by step until all the module screens receive the synchronization signal.
